(19) Europäisches Patentamt
European Patent Office
Office européen des brevets

(11) **EP 1 615 168 A1**

(12) **EUROPEAN PATENT APPLICATION**

(43) Date of publication:
**11.01.2006 Bulletin 2006/02**

(51) Int Cl.:
*G06T 3/40* *(2006.01)*

(21) Application number: **04425503.2**

(22) Date of filing: **09.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **STMicroelectronics S.r.l.**
**20041 Agrate Brianza (Milano) (IT)**

(72) Inventors:
• **Spampinato, Giuseppe**
**95121 Catania (IT)**

• **Bruna, Arcagenlo Ranieri**
**93017 San Cataldo (IT)**
• **Sanguedolce, Giuseppe**
**90144 Palermo (IT)**

(74) Representative: **Pellegri, Alberto et al**
**c/o Società Italiana Brevetti S.p.A.**
**Piazza Repubblica, 5**
**21100 Varese (IT)**

(54) **Colour interpolation in DWT domain**

(57) A method of color interpolation of pixels of an image detected by a digital color sensor comprises the steps of interpolating separately the pixels belonging to each of a plurality of subdivision channels of the pixels of the detected image respectively for primary red-green-blue colors (RGB) or for base hues for generating weighted values relating to either said primary colors or to said base hues for each pixel of the image to be output.

This method generates images with enhanced details because it comprises the steps of defining wavelet coefficients of the wavelet sub-band LL depending on the values of the pixel of each channel; and estimating for each channel wavelet coefficients of the other wavelet sub-bands HL, LH and HH of the image to be output in function of said wavelet coefficients of the wavelet sub-band LL of the image to be output.

FIG. 22

**Description**

FIELD OF THE INVENTION

This invention relates in general to techniques for processing data of images acquired by a color digital sensor and more particularly to a method of interpolating color information for each pixel of the image starting from the values generated by photosensitive elements of the sensor filtered according to a certain spatial pattern for converting light of one of the primary colors or of base or complementary hues.

ACKNOWLEDGEMENT OF PRIOR ART

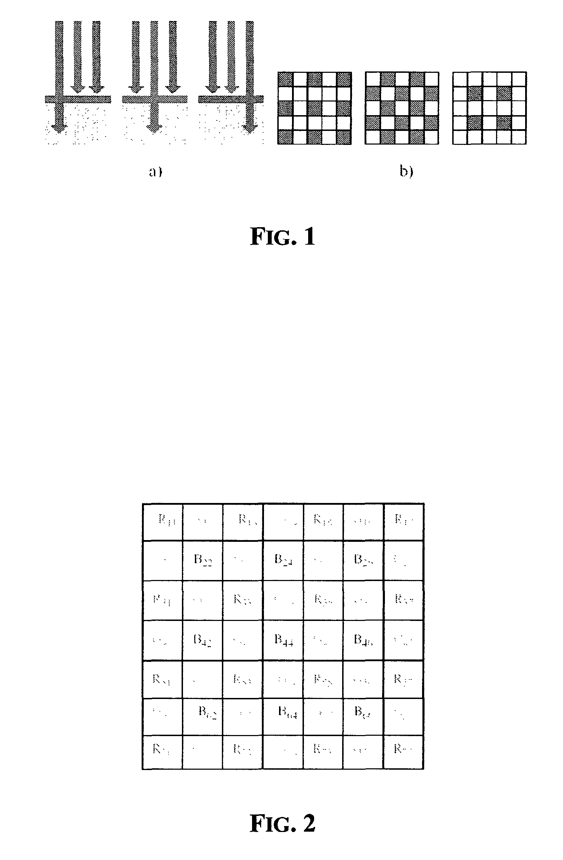

Modem digital cameras use an electronic sensor for acquiring spatial variations of light intensity.
The two main technologies for manufacturing sensors are CCD (Charge Coupled Device) and CMOS (Complementary Metal Oxide Semiconductor).
For example, a CCD is a set of photosensitive diodes that convert photons (light) into electrons (electric charge). Each diode, called *photosite,* delivers a charge proportional to the amount of light to which it has been exposed.
The sensors of a digital camera may be schematized as a bi-dimensional array of millions of small cells that convert the photons of such a small part of (pixel) the image in electric charge. The electrical charge is eventually transformed into a digital datum of the image by an analog-to-digital converter.
Each photosensitive element must be made sensitive to a single color component by applying a filter to it, as depicted in Figure 1.
A filter may discriminate among primary colors or among complementary or base hues. These filters are arranged on the light converting cells according to a certain spatial pattern. In case of the common RGB format, the filters are commonly applied according to the so-called Bayer Pattern [1], shown in Figure 2, wherein half of the pixels are green, a quarter of them are red and the other quarter of them are blue.
As shown in Figure 2, the green and blue pixels alternate on a row while the green and red pixels alternate on the next row, and this pattern is repeated for the whole pixel array of the image.
The main reason that has lead to produce twice the number of green pixels than the number of red and blue pixels rests on the fact that human eyes are more sensible to the green component of the light.
Therefore, the output of each CCD sensor is a digital data stream of primary color pixel values, red, green and blue. To generate or reconstruct a color image, an operation known as *color interpolation (Demosaicing* [19*,* 20, 26, 27]) has to be performed, for calculating a triplet of RGB values for each pixel. For example the red component of a pixel for which only the green component has been acquired, must be calculated by taking into account the red pixels closest to the pixels being processed.
The objective of color interpolation consists in transforming the acquired data stream for instance according to the scheme of Figure 1, so that the resulting image has a quality similar to that obtained using three CCD sensors for each pixel.
A definition of interpolation could be: "information *recovering, based on the current model, of continuous data starting from discrete data available within a known range of coordinates".* The interpolation is based on three main hypothesis:

    1. the data are defined in a continuous fashion;
    2. starting from data samples it is possible to calculate the values of the considered continuous function for each coordinate;
    3. calculating the underlying continuous function at the sampling points generates the same values produced by the considered data.

For example, in case of a Bayer pattern, the simplest and coarsest method of interpolation consists in applying a local operator 2x2, that is a replication of the adjacent pixel, known also as zero order interpolation.
Any 2x2 block extracted from the original Bayer pattern will be composed of two green pixels, a red and a blue pixel, as depicted in Figure 3.
For each block of the image, the R, G, B components of the first pixel at top left, referring to Figure 3, are determined as follows:

$$R_{12} = R_{13}, \ G_{12} = G_{12} \text{ or } \frac{G_{12} + G_{23}}{2}, \ B_{12} = B_{22}$$

The quality of the reconstructed image is quite poor.

A more advanced interpolation technique than the simple replication of the adjacent pixel is the bi-linear interpolation.

In this case the dimensions of the reference mask of considered pixels is 3x3.

Two possible interpolation methods are used depending on whether the value of the pixel to be evaluated is green or red/blue.

From the pattern of Figure 4 it is possible to see what happens when at the center of the mask there is a blue pixel and the green and red components must be estimated (similar to the case of a red pixel in the middle the green and blue components of which must be estimated).

Let us consider the value $B_{44}$. To determine $G_{44}$ given the values of $G_{34}$, $G_{43}$, $G_{45}$ and $G_{54}$ it would be sufficient to estimate

$$G_{44} = \frac{G_{34} + G_{43} + G_{45} + G_{54}}{4}$$

If the value $R_{44}$ had to be estimated given $R_{33}$, $R_{35}$, $R_{53}$ and $R_{55}$, it would be done with the following formula:

$$R_{44} = \frac{R_{33} + R_{35} + R_{53} + R_{55}}{4}$$

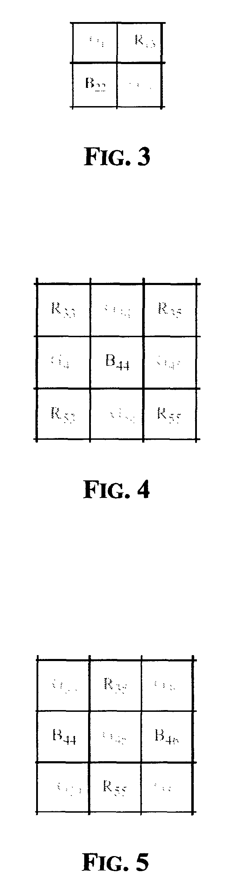

In Figure 5 it is possible to see what happens when a green pixel is at the center of the mask and the red and blue components must be estimated.

If the value $G_{45}$ is considered, in order to determine $B_{45}$ or $R_{45}$ given $B_{44}$, $B_{46}$ and $R_{35}$, $R_{55}$ it would be sufficient to estimate:

$$B_{45} = \frac{B_{44} + B_{46}}{2}, \qquad R_{45} = \frac{R_{35} + R_{55}}{2}$$

Other interpolating algorithms of the Bayer pattern are based on the gradient function [22, 27]. This technique has been proposed by R. H. Hibbard in 1993 and is based on an adaptive interpolation of a color image considering luminance gradients. This technique reduces color artifacts and improves the definition of borders in an adaptive way.

The first step consists in defining the gradient function of the green pixels along the horizontal and vertical direction; referring to Figure 2 and considering the pixel $B_{44}$ as a reference, the following equations hold

$$\Delta H = |G_{43} - G_{45}|, \ \Delta V = |G_{34} - G_{54}|$$

The green channel interpolation is performed in relation to the value of the gradient function; indeed the horizontal and vertical gradients are evaluated in relation to pre-established threshold values. Being $T$ the threshold value chosen as a reference, it is:

$$G_{44} = \begin{cases} \dfrac{G_{43} + G_{45} + G_{34} + G_{54}}{4} & \text{if } T < \Delta H \text{ and if } \Delta V > T; \\[2mm] \dfrac{G_{43} + G_{45}}{2} & \text{if } \Delta H < T; \\[2mm] \dfrac{G_{34} + G_{54}}{2} & \text{if } T > \Delta V. \end{cases}$$

Thus the green channel interpolation can be considered done.

The interpolation of the red and blue channels is carried out in a similar way. Preliminarily, the red (or blue) channel must be populated in respective blue (or red) locations such to have the same structure of the green channel. This preliminary step for interpolating the red and blue channels may be performed in different ways, but Hibbard suggests a bilinear approach.

The interpolation technique based on the hue [22, 27] is one of the earliest methods used in commercial cameras with CCD or CMOS sensors and it has been proposed by Cok in 1986.

Color artifacts are due to sudden variations of hue inside an object, because it is necessary to keep the hue of the color. As previously stated, the red and blue color channels are approximated to the chrominance component, while the green channel is approximated to the luminance component. The term hue is referred to the relation among the luminance and chrominance components.

For the considered case, the hue is defined as Red/Green and Blue/Green. In particular the green channel is first interpolated using a bi-linear technique. The next step consists in interpolating the hue values and in obtaining interpolated chrominance values from the hues; in so doing only gradual hue variations are considered.

Referring to Figure 2, the interpolation of the red values at sensor array locations of green pixels is:

$$R_{33} = G_{33} \frac{\dfrac{R_{23}}{G_{23}} + \dfrac{R_{34}}{G_{34}}}{2}, \qquad R_{24} = G_{24} \frac{\dfrac{R_{14}}{G_{14}} + \dfrac{R_{34}}{G_{34}}}{2}$$

The interpolation of values of red pixels in blue pixel locations is:

$$R_{23} = G_{23} \frac{\dfrac{R_{12}}{G_{12}} + \dfrac{R_{14}}{G_{14}} + \dfrac{R_{32}}{G_{32}} + \dfrac{R_{34}}{G_{34}}}{4}$$

The values of the blue pixels are determined in a similar fashion.

The known interpolation methods of the colors used in modem cameras work in the RGB domain and this sensibly limits the possibility of compensating imperfections, while keeping a good signal/noise ratio for allowing *zooming* with a reduced definition loss, without increasing significantly the complexity of elaboration.

SUMMARY OF THE INVENTION

It has been found a more efficient and advantageous method of interpolating values of color pixels of an image detected by a digital sensor by separately interpolating the pixels belonging to each of a plurality of channels of subdivision of pixels filtered respectively per primary colors (red-green-blue or briefly RGB) or per base hues of the detected image for generating weighted values relative to either primary colors or base hues for each image pixel to be output that, differently from the known methods, is substantially performed in the domain of the discrete wavelet transform of the values of image pixels generated by the digital sensor belonging to the same subdivision channel.

The characteristic of preserving at the same time the information on the temporal position and on the frequency position, makes the wavelet transform useful for many applications. Moreover, in contrast to the most commonly used methods of signal analysis, such as the Fourier transform and the discrete cosine transform, the wavelet transform is very convenient because it is relatively simpler to be implemented.

Wavelets are functions that must satisfy certain requirements; in fact their name "*Wavelet*" (Small Wave) originates from the fact that their integral is null, because they *wave* above and below the x-axis, in practice for having a limited duration while keeping a mean value close to zero. The word *"Small"* refers to the fact that these functions have a limited support, that is they have a finite length. By contrast the word *"Wave"* refers to the oscillating nature of the functions.

The main idea that has inspired the wavelets consists in the possibility of varying the scale of the functions instead of their frequency! Instead of representing a function as a sum of weighted delta functions (as it happens in the time domain), or as a sum of weighted sine functions (as it happens in the frequency domain), the function may be represented as a sum of certain "arbitrary" functions, that are time-translated and frequency-dilated, and that have been generated from a single prototype function, called mother wavelet function, $\Psi(x)$.

The expression *"time-translated"* implies a shift of the domain in which the function is defined. From a mathematical point of view, shifting a function $\Psi(t)$ of a quantity k is equivalent to represent it with the function $\Psi(t-k)$. This

term obviously corresponds to a time information in the transformed domain, but there is not any frequency parameter.

As far as the *"scaling"* operation is concerned, it is mathematically equivalent to expanding or compressing a signal. Higher scales correspond to more "dilated" wavelet and vice versa; as a consequence, the larger the considered dilation, the larger the portion of signal compared with the wavelet itself. The relation between scale and frequency is that small scales correspond to high frequencies, and thus to portions of signals in which sudden variations are present; while high scales correspond to low frequencies, that is zones of the signal with slow variations.

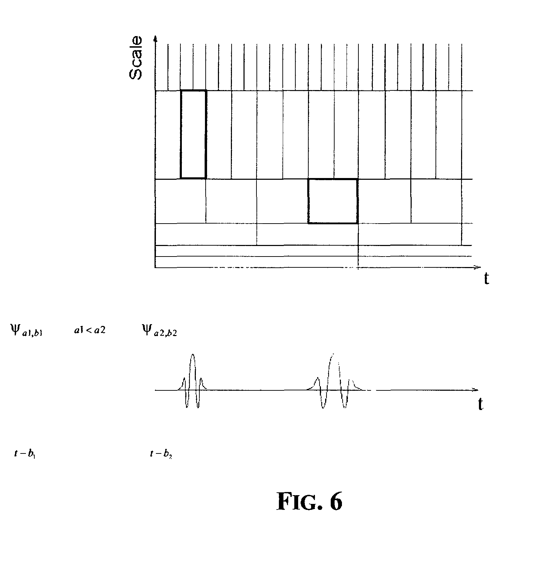

The plane time-scale, depicted in Figure 6, is useful for understanding how the time and frequency resolutions should be interpreted.

Each cell represented in this plane, Figure 6, corresponds to a value of the wavelet transform. Let us notice that all the cells have an area the dimension of which differs from zero, which implies the possibility of knowing all the values of a particular point inside this plane.

The inventors' approach consists in analyzing the structure of the information on all the scales, as it happens in the human visual system. More precisely, the human visual system identifies the variations of a scene in a hierarchic manner on more resolution levels, and this is exactly what happens by applying the wavelet analysis.

In practice a signal $f$ is decomposed along a basis of functions $\Psi_i$ :

$$f = \sum_i a_i \Psi_i$$

In order to have a more efficient representation of the signal $f$ using only few coefficients $a_i$, it is very important to use an adequate family of functions $\Psi_i$. These functions $\Psi_i$ should track the trend of the characteristics of data to be represented.

The first wavelet transform compares the whole function with the wavelet, then it compares smaller portions of the function with the wavelet; the process is completed on progressively reduced scales. This procedure leads to a representation of the original function as the sum of wavelets at various scales and time positions, reaching a compromise between time localization and frequency/scale localization.

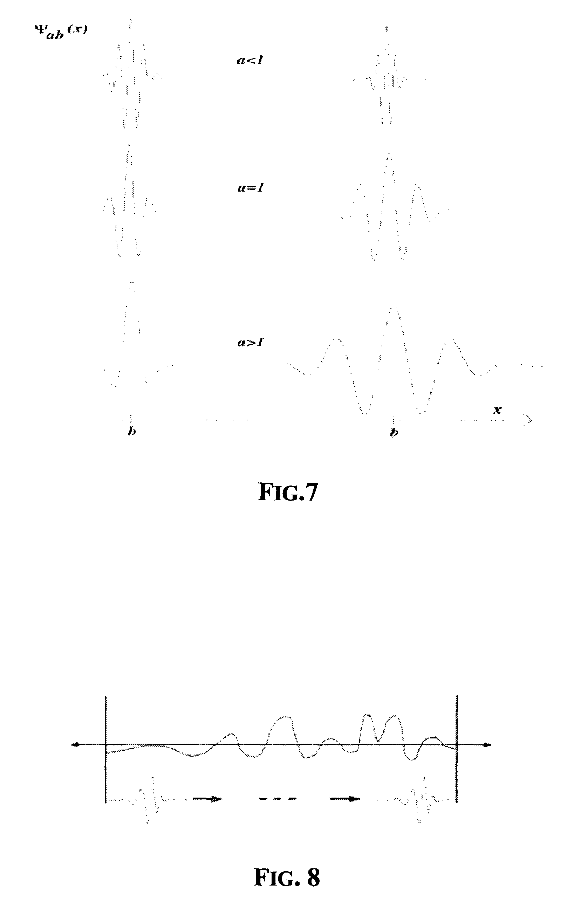

In Figure 7 it is possible to notice what happens to the Short Fourier Transform (STFT) and the Wavelet Transform (WT) when the frequency varies; indeed, with the first transform, by varying the frequency of the main functions, the amplitude of the pulses remains the same. In case of a wavelet transform, by varying the frequency of the main functions varies also the amplitude of the wavelet.

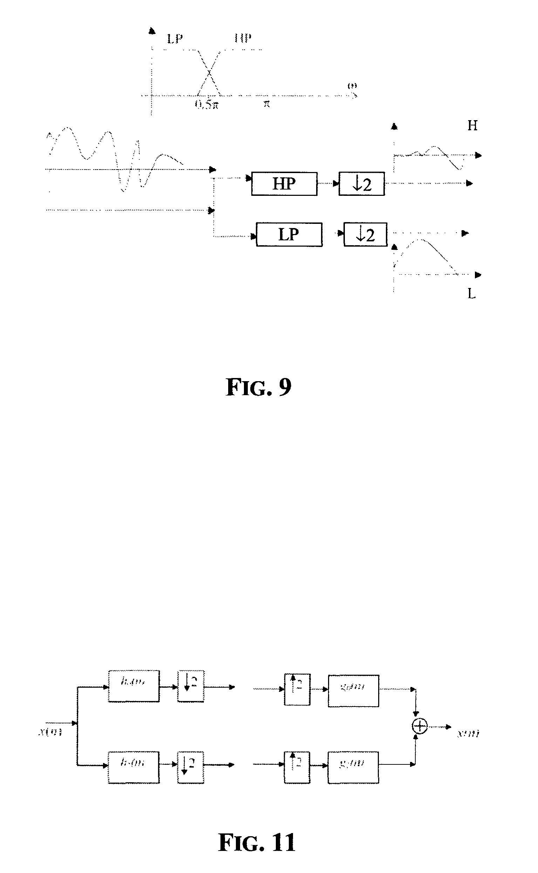

In the case of a continuous wavelet transform, see Figure 8, the signal is analyzed by using a set of base functions that are tied among them by using simple scale and translations functions. In the case of a discrete wavelet transform, a time-scale representation of a digital signal may be obtained by using digital filtering techniques.

The discrete wavelet transform provides a relatively fast tool for calculating wavelet coefficients, because of its simplicity of implementation, for the reduction of the computational time and the reduced need of resources.

The concept of multi-resolution analysis introduced by Mallat [2], examined from the point of view of the signal analysis, appears connected to the concepts of pyramidal decomposition and of *sub-band coding* [13], in the discrete case.

The wavelet decomposition procedure is based on the application, eventually iterated in the resulting low-pass component, of high-pass and low-pass filters. Being $\pi$ the Nyquist frequency in radians, Figure 9 illustrates the frequency response of the two filters. Moreover, in this figure also the process of decomposition of the original signal in the two sequences H and L, respectively obtained by the application of the high-pass filter (HP) and the low-pass filter (LP), is shown.

These sequences are undersampled by a factor 2 in respect to the original signal, for eliminating the samples with redundant information.

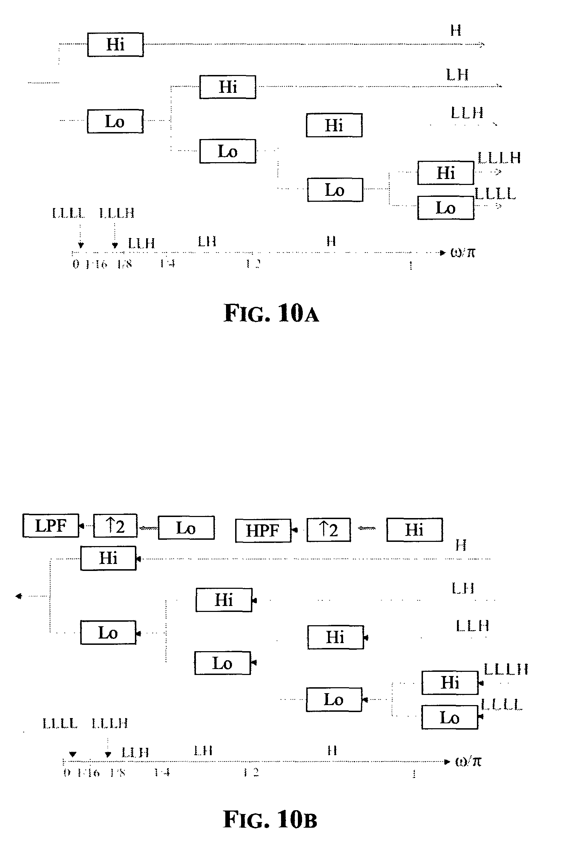

According to the scheme of Mallat, the decomposition process may be re-iterated on the sequence L, as shown in Figure 10a.

The reconstruction of the signal, starting from the wavelet coefficients, takes place by a process that is the reverse of the decomposition process. The approximation and detail coefficients at each level are oversampled by a factor 2, filtered through two synthesis filters, a low-pass and a high-pass filter, and then summed up. The process is repeated for the same number of levels used in the decomposition process for reconstructing the original signal, as shown in Figure 10b.

In many applications of the wavelet transform the original signal must be synthesized, without any loss of information, starting from the wavelet coefficients. Nevertheless, in order to obtain a perfect reconstruction of the signals, the analysis and synthesis filters must fulfill certain conditions.

Let us suppose that $G_0(z)$ and $G_1(z)$ are the transfer functions of the analysis and synthesis low-pass filters, and that $H_0(z)$ and $H_1(z)$ are the transfer functions of the high-pass analysis and synthesis filters.

The considered filters must satisfy the two following conditions:

$$G_0(-z)G_1(z) + H_0(-z)H_1(z) = 0$$

$$G_0(z)G_1(z) + H_0(z)H_1(z) = 2z^{-d}$$

The first condition implies that the reconstruction does not have superpositions in correspondence of the tails between the frequency bands (*aliasing*), the second condition implies that the amplitude of the distortion is about one.

It may be noticed that the conditions of perfect reconstruction do not change if the analysis and synthesis filters are exchanged, Figure 11.

The Lifting scheme [11, 12, 14, 25] is an algorithm used for calculating the wavelet transforms in an efficient manner, and is a very important property and that each bank of filters based on this scheme satisfies the property of perfect reconstruction of the signal.

Originally, this method was developed for improving a given wavelet transform so to obtain certain specific properties, for instance the bi-orthogonality. Successively, it has been extended to became a method for generating in a more general manner the so-called wavelets of second generation [12].

The wavelets of second generation are more general in the sense that all classic wavelets may be generated starting from the application of the lifting scheme; in fact the decomposition of a classic wavelet filter according to the lifting scheme may be obtained in a simple manner by applying the Euclidean algorithm, that acts as a connection between the classic wavelet transforms and the lifting scheme.

The theory of the wavelets is much influenced by the analysis in the Fourier domain without using the concept of Fourier transform, and this allows to explain in the simplest way the main idea underlying the wavelet theory.

The wavelet transform of a mono-dimensional signal is a multi-resolution representation of the signal itself wherein the wavelet are base functions that, at each resolution level decorrelate the signal.

Therefore, at each resolution level, the signal (that is its low-pass component) is divided recursively in a low-pass portion and a high-pass portion. These two components of the signal are obtained by applying appropriate wavelet filters, that respect certain conditions, such as the possibility of reconstructing the signal without losing information.

The lifting scheme is an efficient implementation of these filtering operations, applied at each resolution level, when the discrete wavelet transform of a signal is calculated.

Let us suppose for example that the component at low resolution (low-pass) of a signal at level $j$+1 is available and that it is composed of a set of data indicated as $\lambda_{j+1}$. This set of data is decomposed in other two subsystems at a resolution level j: a part at low resolution (low-pass) $\lambda_j$ and a part at high resolution (high-pass) $\lambda_j$. These two components of the signal are obtained initially by subdividing the set of original data $\lambda_{j+1}$ into two subsets; classically this subdivision is made by separating the set of even samples of the signal from that of the odd samples. Such a subdivision is known as Lazy Wavelet Transform. By applying this type of decomposition the signal representation is not improved.

Next step consists in recombining the two sets of values previously obtained, by applying different consecutive lifting steps that even more decorrelate the signal.

Usually the steps of the lifting scheme are organized in pairs formed by a primary step and a dual step.

A lifting dual step may be considered as a sort of prediction; in fact it is possible to consider that the data belonging to the set $\gamma_j$ be predicted starting from the data contained in the set $\lambda_j$. It is worth noticing that in the case in which the signals are highly correlated then such a prediction will be in general very good, and thus it is not necessary to keep the information in both components of the signal. This because it is possible to keep only the part of information of $\gamma_j$ that differs from its prediction (the error prediction). Thus $\gamma_j$ is substituted by $\gamma_j - P(\lambda_j)$, wherein $P$ is a prediction operator; this represents a phase of real substantial decorrelation of the signal!

Nevertheless, the so obtained new representation of the signal loses some basic properties, that usually should be retained, such as for instance the mean value of the signal. To recover this property it is necessary to apply a primary lifting step through which the subset $\lambda_j$ is updated with the data calculated starting from the new subset $\gamma_j$. In particular, the values of $\gamma_j$ are substituted by the values obtained from $\lambda_j + U(\gamma_j)$, wherein $U$ is an updating operator.

In general, different lifting steps of this type may be applied in sequence for going from a resolution level $j$+1 to a level $j$.

One of the greatest advantages of using the lifting scheme for a wavelet transform is that the involved operations are elementary operations and, as a consequence, each of said steps is very simple to be reversed. As a result, the inverse wavelet transform may be obtained immediately starting from the direct wavelet transform, by inverting the order of the operations, and the sign in the lifting steps and by substituting the subdivision step of the even and odd samples with a recomposition operation.

Moreover, the lifting scheme, compared with the classical wavelet transform algorithms, has advantages deriving from the easiness of comprehension and implementation. In fact, even if the computational cost remains in the order of $O(n)$, computation is comparably faster than for classical algorithms, because the coefficients to be calculated are less numerous.

At each step, only the coefficient of the previous step is necessary, thus without requiring use of additional memory.

Before starting the description of the algorithms that are used according to the method of this invention during the color interpolation phase of images acquired by a digital sensor, it is useful to make some considerations on the problems that have been faced during the development of this novel technique.

To show the method of the invention let us consider an input Bayer pattern image acquired by a color digital sensor having the checkerboard pattern of Figure 2 that may be seen within the image as acquired by the sensor.

As previously stated, the Bayer pattern is characterized by an alternated arrangement of green and red pixels on a row and of blue and green pixels on the next row; this pattern repeats itself on the whole image.

As usual, the interpolation operation is performed on each one of the three channels R, G, B and thus, starting from the Bayer format of the input image, three complementary interpolations are performed, one for each color channel.

The number of pixels of the image pertaining to the channel G is twice than that of the channels R and B.

A type of representation that may be used for the green channel, G, consists in considering separately the images relating to the pixels of the green component neighboring the red pixels, called Gr, and to the pixels of the green component neighboring the blue pixels, called Gb. Obviously, depending on the needs, it is possible to use one or the other representation of the G channel.

However, separately considering the single channels introduces a problem relative to the dimensions of the respective images. Indeed, after the phase of decomposition of the Bayer pattern in the components (channels) R, G, B, three distinct images are created, one for each color channel, that for the red and blue channels are half the dimensions of the original image as acquired by the sensor. The same applies to the green channel, if the Gr and Gb components or subchannels are considered separately. By contrast, considering the whole G component or channel the relative image has its horizontal dimension equal to that of the original image, while its vertical dimension is twice that of the original image.

Indeed, the method of interpolation of this invention acts in this respect by operating a sort of image zooming, preferably by a factor 2, for restoring the size of the image relative to the green component to the dimensions of the original image, such to recombine directly the components of the single color channels for outputting a recombined image in which each image pixel is represented by a triplet (R, G, B).

Specific considerations will be made for the interpolation the G channel.

According to this invention, wavelets are used for expanding images, exploiting the characteristics of the wavelets. Indeed, among all potentialities of the wavelets, one consists in that each anti-transform step, from a spatial point of view, is equivalent to zooming the initial image by a factor 2. An important problem faced by the inventors consisted in establishing wavelet coefficients to be introduced correctly for performing the anti-transform.

From a theoretical point of view, when the wavelet transform is applied to an image, a signal is output that contains information in terms of time and frequency, represented in a conjuncted domain. In particular, filtering operations that decorrelate the components of the signal are performed, as depicted in Figure 12, for separating the signal component that contains the largest amount of information from detail components.

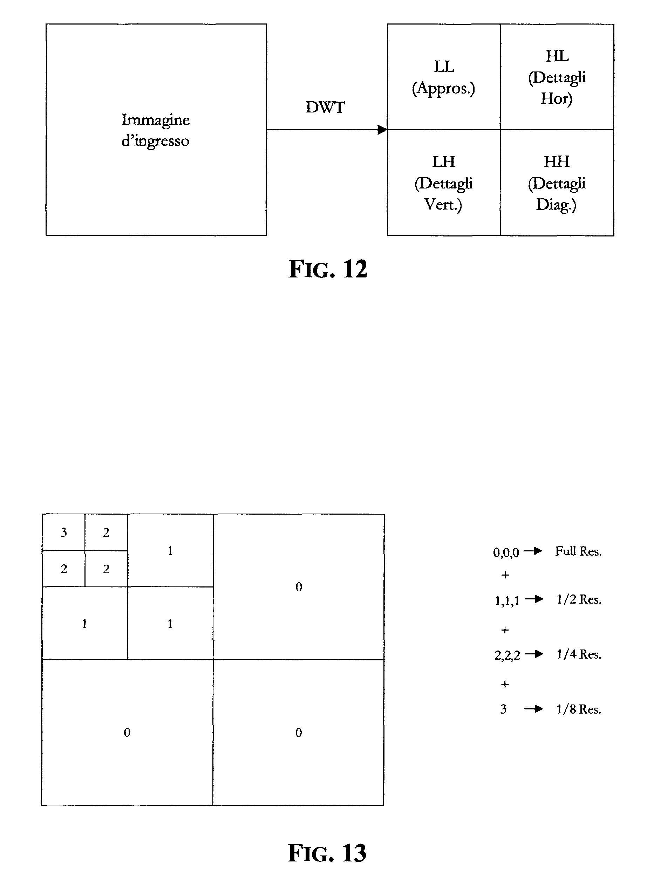

The connection between the low-pass component of the input signal (LL) and the input image is due to the fact that the first is a decimated version of the latter. The decimation operation halves the horizontal and vertical dimensions of the original image by alternately eliminating a row and a column. Thus, in the first quadrant of the transformed image, that is the component LL, a characteristic of approximation of the input signal is preserved. By iterating the wavelet transform process, that is by carrying out a transform through a plurality of levels, the LL component of the signals is decimated again and again, thus obtaining progressively reduced levels of resolution, as depicted in Figure 13.

By applying the wavelet transform to an image, a new representation of the image is obtained wherein a quarter of the output retains an approximated component (LL) of the input, at a level of resolution that is half the original while the remaining three quarters of the output provide contributions in terms of details.

In practice, what can be done is reconstructing the starting image by considering only the approximated content provided by the wavelet transform, neglecting all details. In the wavelet domain this type of operation coincides with a zooming of the image [7] by a factor 2.

As may be observed in Figure 13, the input image, for example having dimensions 128x128, is approximated as a hypothetical low pass component of a wavelet transform of an image of double dimensions, that is 256x256. In fact the image to be expanded is located in the region LL, corresponding to the main component of the input signal, of the wavelet transform and the other components are considered null.

This assumption of assigning a null value to the components of detail, that is of not considering the high frequency components, leads to an approximated representation of the image at the output wherein the main differences will be noticed especially near the zones in which step (abrupt) differences of color are present, for instance in passing from white to black. Moreover, a *zipper* effect distributed on the whole image may also be observed.

The applicants have found effective ways of interpolating the detail coefficients the information content of which is totally lacking.

Two alternative effective ways of performing this interpolation in the wavelet domain that generate outstandingly good results in terms of quality of the output interpolated image have been found.

According to a first embodiment, information on the high frequency wavelet coefficients are obtained by exploiting the spatial characteristics of the input image.

According to an alternative embodiment, a connection among the known wavelet coefficients of the input images subdivided in a plurality of channels, in respect to the coefficients to be interpolated, is exploited.

The invention is defined in the annexed claim 1 and particularly effective embodiments are defined in dependent claims.

BRIEF DESCRIPTION OF THE DRAWINGS

The subject or content of the drawings is a specified below:

| | |
|---|---|
| **Figure 1** | **a)** part of a CCD sensor with red, green and blue filters for the single diodes; |
| **Figure 1** | **b)** single chip sensors detect only 25% of information relative to the red and to the blue components and 50% relative to the green components; |
| **Figure 2** | Bayer pattern; |
| **Figure 3** | 2x2 block extracted from the Bayer pattern; |
| **Figure 4** | interpolation of green and red pixels; |
| **Figure 5** | interpolation of red and blue pixels; |
| **Figure 6** | representation of the plane time-scale with two scaling and translation operations; |
| **Figure 7** | comparison between the Short Fourier Transform (left) and the Wavelet Transform (right) upon varying the frequency of the main function; |
| **Figure 8** | continuous wavelet transform; |
| **Figure 9** | sample wavelet filtering; |
| **Figure 10** | pyramidal or sub-band coding algorithm; a) analysis, b) synthesis; |
| **Figure 11** | sample filtering scheme for a perfect signal reconstruction; |
| **Figure 12** | sample wavelet decomposition; |
| **Figure 13** | wavelet decomposition on three levels and corresponding resolutions for each quadrant in respect to the original resolution; |
| **Figure 14** | Block diagram of the method of this invention; |
| **Figure 15a** | sample wavelet coefficients belonging to an homogeneous zone of the input image; |
| **Figure 15b** | sample wavelet coefficients belonging to a non homogeneous zone of the image; |
| **Figure 16** | wavelet coefficients of the HL sub-band obtained from the input image; |
| **Figure 17** | wavelet coefficients of the LH sub-band obtained from the input image; |
| **Figure 18** | sample complete interpolation of the wavelet coefficients; |
| **Figure 19** | sample anti-transforms image according to a first embodiment; |
| **Figure 20** | interpolation scheme based on the spatial characteristics of the single subdivision channels of the input image, according to the first embodiment of the invention; |
| **Figure 21** | zooming scheme in the wavelet domain of the single channels of subdividing of the input image through interpolation in function of calculated threshold values of the coefficients of the sub-bands LH and HL; |
| **Figure 22** | interpolation scheme of the single subdivision channels of the input image through the analysis of known wavelet coefficients, according to an alternative embodiment; |
| **Figure 23** | interpolation scheme of the first level wavelet coefficients starting from the second level coefficients obtained by transforming the values of the input image channel; |
| **Figure 24** | spatial correspondence among the coefficients of the sub-band HL2 and HL1; |
| **Figure 25** | sample interpolation by replication of the known value and setting to zero the three missing neighboring values; |
| **Figure 26** | sample interpolation by distribution with a constant weight of the value of the known coefficient; |
| **Figure 27** | sample interpolation by weighted distribution of the known coefficients on the values to be estimated; |
| **Figure 28** | interpolated images with: **a)** prior art, **b)** spatial analysis, **c)** known wavelet coefficients according to alternative Method 1, **d)** Method 2, **e)** Method 3; |
| **Figure 29** | decomposition of the Bayer pattern in the triplet R, G, B and relative dimensions of the single channel images; |
| **Figure 30** | representations of the channel G with either the Gr or Gb subcomponent channels; |

**Figure 31**    interpolation of G pixels by considering the pixels Gr adjacent to the pixels Gb;

**Figure 32**    interpolation of the pixels G from the pixels Gr and Gb;

**Figure 33**    interpolation results of the G channel: **a)** by weighted interpolation, **b)** by average among the values of Gr and Gb;

**Figure 34**    interpolation results: **a)** bilinear, **b)** bi-cubic, **c)** by spatial analysis, **d)** interpolation with constant weight from known coefficients, e) with variable weight from known wavelet coefficients;

**Figure 35**    interpolation results: **a)** bilinear, **b)** bi-cubic, **c)** by spatial analysis, **d)** with constant weight, **e)** with variable weight from known wavelet coefficients.

DESCRIPTION OF SEVERAL PREFERRED EMBODIMENTS OF THE INVENTION

A zooming technique in the wavelet domain that exploits the sole low-pass component of the input signal, for reconstructing the output image, as remarked above, neglects completely the information contribution provided by details, in spite of the quality of the image itself. This may be observed especially near the borders, that are much less defined than the original, and by a blurring effect that characterizes the whole image.

According to a first embodiment of this invention, the followed approach consists in recovering part of the information lost in considering null the wavelet coefficients of the HH band at high frequency, by exploiting the spatial distribution of the preserved low-pass component.

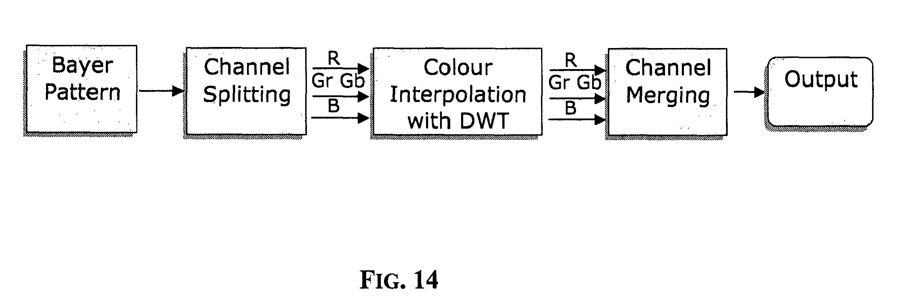

Considering for example the case of an input Bayer pattern image, Figure 14 shows schematically the main steps of the algorithm of the present invention for performing color interpolations of the input Bayer image, generating triplets of weighted values relative to the three primary colors (RGB) for each pixel of the image to be output.

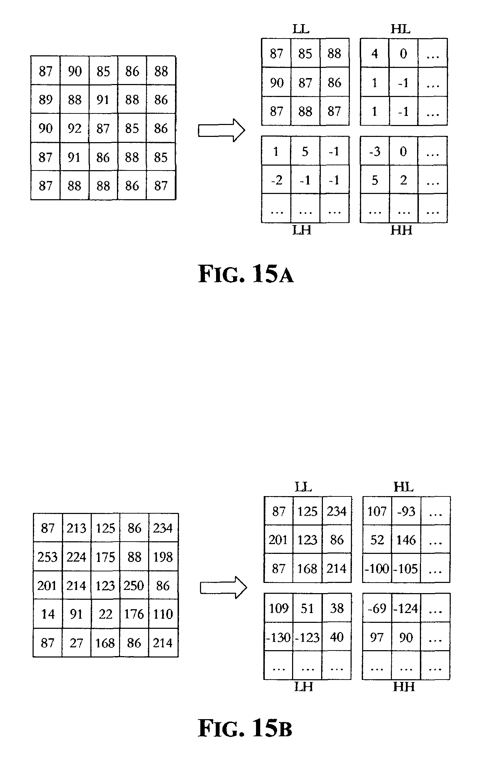

It should be noted, that when the wavelet transform of an image is considered, the output values of the wavelet coefficients in each sub-band may give an idea of the spatial distribution of the input image. In fact, if a particular wavelet coefficient has a value very close to zero, then, depending on the characteristics of wavelet coding with lifting scheme, it is possible to affirm that the region of the input image that is being analyzed has a rather homogeneous distribution, in terms of grey levels as shown, by way of an example, in Figure 15.

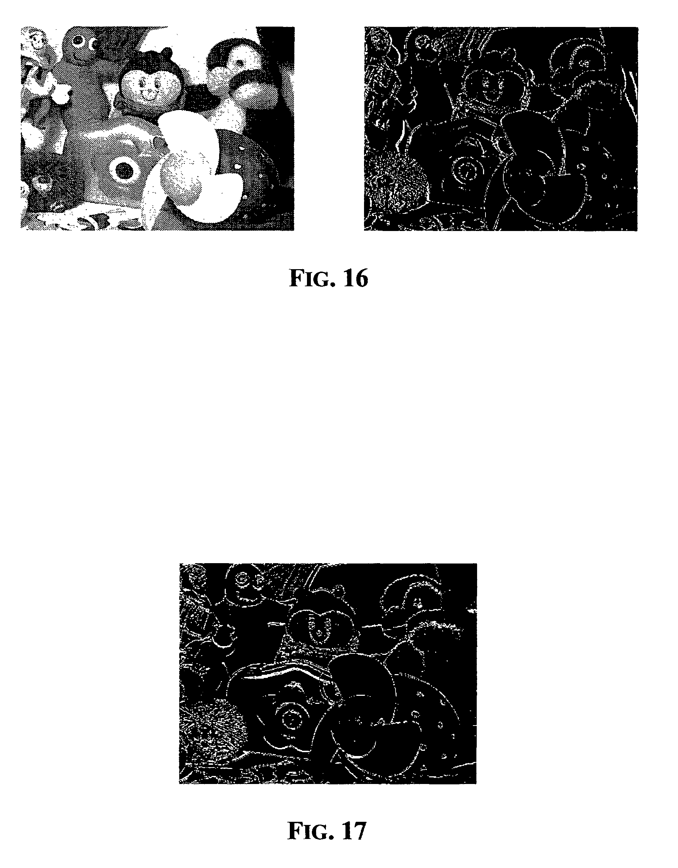

Viceversa, when high values of wavelet coefficients are found, it is reasonable to consider that in the examined zone of the input image there is a noticeable variability, or in other words that it is located near a border zone between regions, the grey levels of which differ noticeably, as shown by way of an example in Figure 16.

The logic used for trying to obtain the information content provided by the missing wavelet coefficients, is based on an analysis of the measure of spatial correlation of the values inside the image.

This correlation value is defined in terms of difference in modulo between the values of the current and the successive pixel.

Therefore, being $p_{i,j}$ the value of the current pixel and with $p_{i,j+1}$ the value of the successive pixel, the introduced correlation measure may be expressed as:

$$\Delta h = \left| p_{i,j} - p_{i,j+1} \right|$$

This correlation is only the correlation between the horizontal components of the image; similarly the vertical correlation $\Delta v = |p_{i,j} - p_{i+1,j}|$ may be obtained, wherein $p_{i+1,j}$ is the successive pixel along the vertical direction.

The meaning of this measure is quite intuitive; indeed, the larger the value obtained, the smaller the correlation among the pixels under examination or, in other terms, the larger the separation among the values of the considered pixels.

Starting from the magnitude of this measure, reference levels or thresholds are experimentally identified, on the base of which the missing wavelet coefficients to be interpolated are evaluated in a localized as possible fashion.

In particular, in the considered sample embodiment, five reference levels have been considered, for evidencing different types of variation in the input image.

The setting of these reference levels has been used for addressing the step of interpolation towards the localization of possible horizontal and vertical contours, as it happens when evaluating the wavelet transform of an image obtaining the HL and LH components, and for this reason measures of correlation along the two directions of the image have been taking into consideration.

Depending on the interval in which the evaluated measure of correlation is located, the interpolation of the corresponding wavelet coefficient is performed by assigning a larger weight to the value of the reference pixel or to the successive one.

In practice, indicating with *tresh* the reference threshold level and with *wav_coef* the wavelet coefficients to be interpolated, relative to the HL sub-band, it is possible to state:

1. if $\Delta h < tresh1$ then *wav_coef = 0* $\rightarrow$ high correlation among neighboring horizontal pixels!

2. if $tresh1 \leq \Delta h < tresh2$ then

$$wav\_coef = \left( \frac{\left((p_{i,j} * 2) + p_{i,j+1}\right)}{3} - \frac{(p_{i,j} + p_{i,j+1})}{2} \right)$$

3. if $tresh2 \leq \Delta h < tresh3$ then

$$wav\_coef = \left( \frac{\left(p_{i,j} + (p_{i,j+1} * 2)\right)}{3} - \frac{(p_{i,j} + p_{i,j+1})}{2} \right)$$

4. if $tresh3 \leq \Delta h < tresh4$ then

$$wav\_coef = \left( \frac{\left(p_{i,j} + p_{i,j+1} + p_{i,j-1}\right)}{3} - \frac{(p_{i,j} + p_{i,j+1})}{2} \right)$$

5. if $\Delta h \geq tresh4$ then

$$wav\_coef = \left( \frac{(p_{i,j} + p_{i,j+1})}{16} \right) \quad \rightarrow \quad \text{low}$$

correlation among neighboring horizontal pixels!

The distribution of the coefficients of the obtained HL sub-band is shown in Figure 16.

In the cases 2, 3 and 4, the presence of the term $((p_{i,j} + p_{i,j+1})/2)$, gives a high-pass cut to the wavelet coefficient to be interpolated. In the remaining cases the above term has not been considered. Indeed, in the case 1), the spatial correlation of the pixels in the input image is so high that the error generated by approximating the corresponding coefficient with a null value is negligible. Vice versa, in the case 2), the correlation is too low to consider a high-pass filtering of the coefficient to be estimated.

A similar reasoning may be done also for the interpolation of the coefficients of the LH sub-band, to detect horizontal contours.

In this case it is possible to state:

1. if $\Delta v < tresh1$ then *wav_coef = 0* $\rightarrow$ high correlation among neighboring vertical pixels!

2. if $tresh1 \leq \Delta v < tresh2$ then

$$wav\_coef = \left( \frac{\left((p_{i,j} * 2) + p_{i+1,j}\right)}{3} - \frac{(p_{i,j} + p_{i+1,j})}{2} \right)$$

3. if $tresh2 \leq \Delta v < tresh3$ then

$$wav\_coef = \left( \frac{\left( p_{i,j} + (p_{i+1,j} * 2) \right)}{3} - \frac{\left( p_{i,j} + p_{i+1,j} \right)}{2} \right)$$

4. *if tresh3 ≤ Δv < tresh4 then*

$$wav\_coef = \left( \frac{\left( p_{i,j} + p_{i+1,j} + p_{i-1,j} \right)}{3} - \frac{\left( p_{i,j} + p_{i+1,j} \right)}{2} \right)$$

5. if Δv ≥ *tresh*4 then

$$wav\_coef = \left( \frac{\left( p_{i,j} + p_{i-1,j} \right)}{16} \right) \quad \rightarrow \quad low$$

correlation among the neighboring vertical pixels!

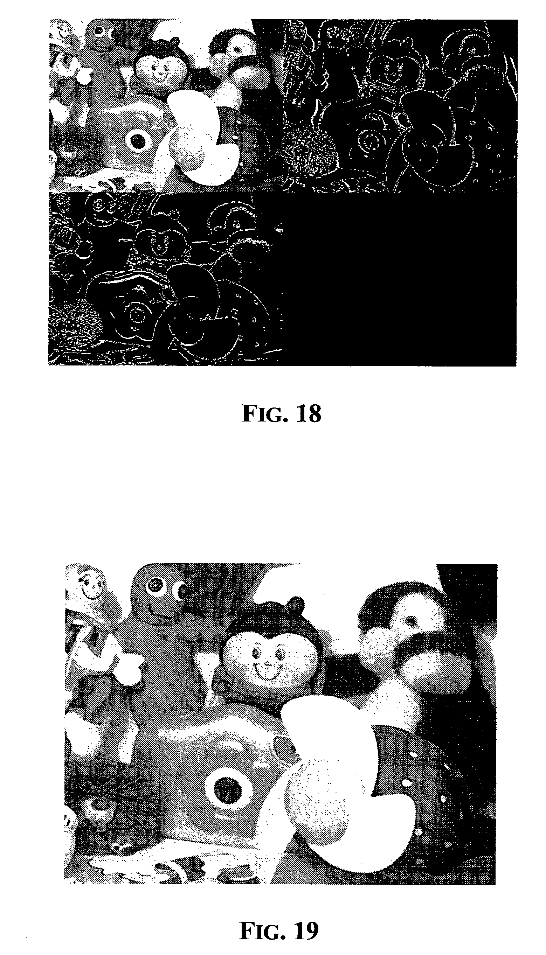

The distribution of the coefficients of the obtained LH sub-band is shown in Figure 17.

So far, the interpolation of the coefficients of the HH band, that is of the purely high-pass component, has not been considered. For these coefficients, following an experimental study, it has been considered preferable not to perform any kind of estimation because of the low or null correlation among the spatial values of the input image and the wavelet coefficients of the HH sub-band. In practice, it has been chosen to neglect the contribution of details provided by these last coefficients that have thus been deliberately replaced by null values, as shown in Figure 18.

Figure 19 depicts the image relative to a single channel, reconstructed with the above illustrated interpolation method.

Considering this type of approximation for the high frequency coefficients of the HH sub-band surely means that very small details are neglected, introducing in particular a slight blurring in the output image; however, it prevents from introducing more consistent errors than considering these interpolated coefficients totally uncorrelated from the original ones. In any case, from a visual point of view, not inserting coefficients of the HH band introduces a negligible error in the output image.

On the other hand, as may be observed from Figure 19, is almost eliminated the *zipper* effect that was observed in the reconstructed image when considering only null values of the wavelet coefficients in the sub-bands HL, LH and HH.

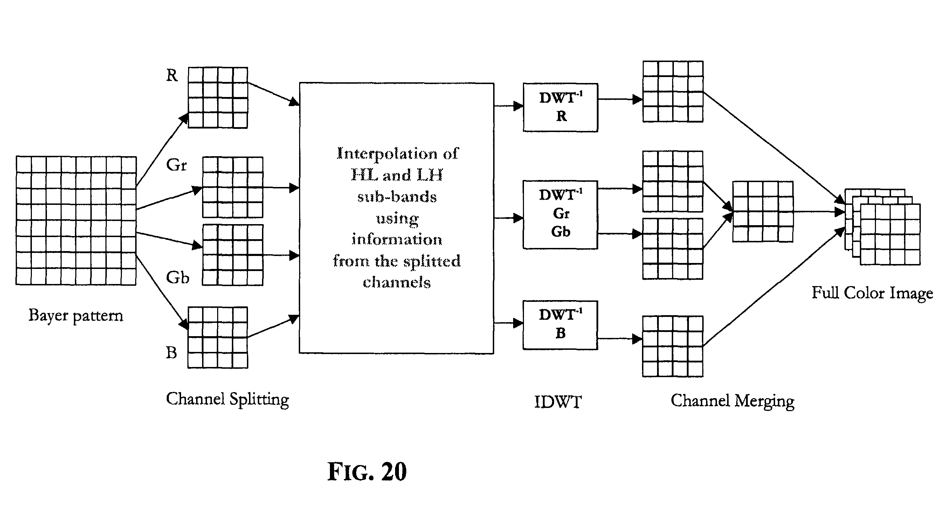

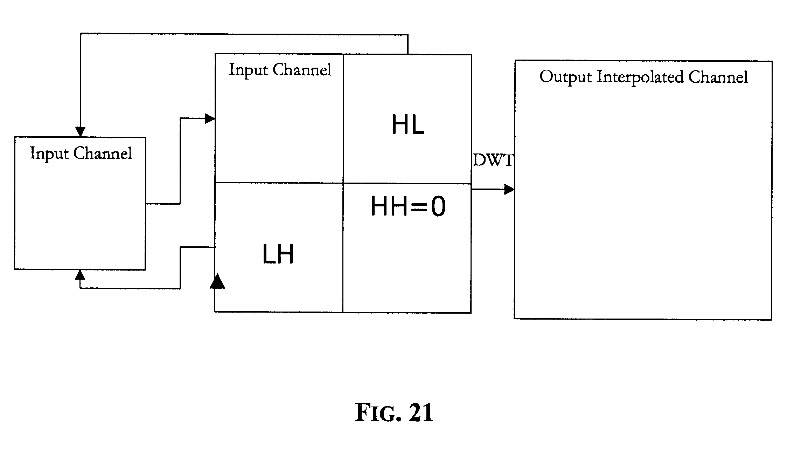

The basic scheme of the method according to this embodiment is depicted in Figure 20.

Even if it is not required to carry out the discrete wavelet transform of pixel values of the channel (primary color or base hue) of subdivision of the pixels of the input image generated by the sensor, for performing the interpolation of the wavelet coefficients of the sub-bands HL and LH (while choosing of setting to zero the coefficients of the HH sub-band), because of the fact that the data of the input channel to be interpolated are considered representing the wavelet coefficients of the LL sub-band, this first embodiment has few drawbacks.

First of all, in terms of computational cost, besides requiring in any case an inverse discrete wavelet transform step, it requires iterated comparisons for evaluating the threshold levels between which the value of the wavelet coefficient to be interpolated may fall.

Considering that the wavelet transform operation as well as the inverse transform operation are particularly simple, in case of hardware implementation of the method by realizing an acceleration circuit, and that the two hardware structures are substantially one a mirror of the other, according to an alternative embodiment of the method of this invention for generating by interpolation the missing wavelet coefficients, the known wavelet coefficients are used by transforming the values of each subdivision channel of the pixels of the input image for generating by interpolation wavelet coefficients of level I starting from the known coefficients of upper level, for each channel.

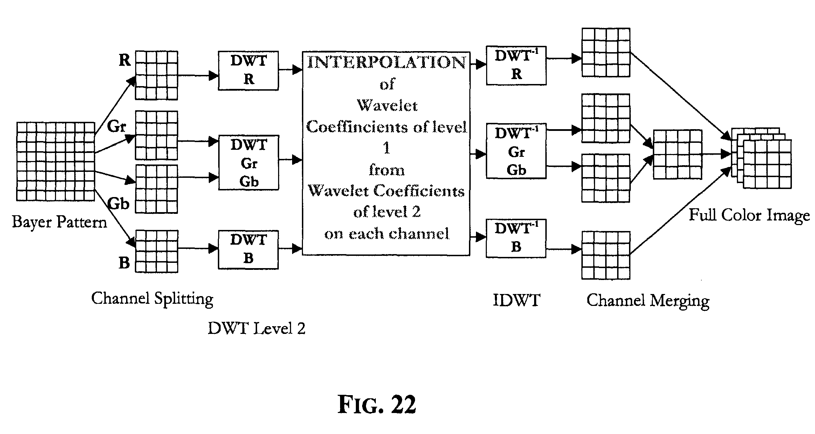

Figure 22 shows a basic scheme according to this alternative embodiment.

In this case, the known wavelet coefficients are considered, that is the values obtained by carrying out the discrete wavelet transform of the pixel values of a subdivision channel of the input image.

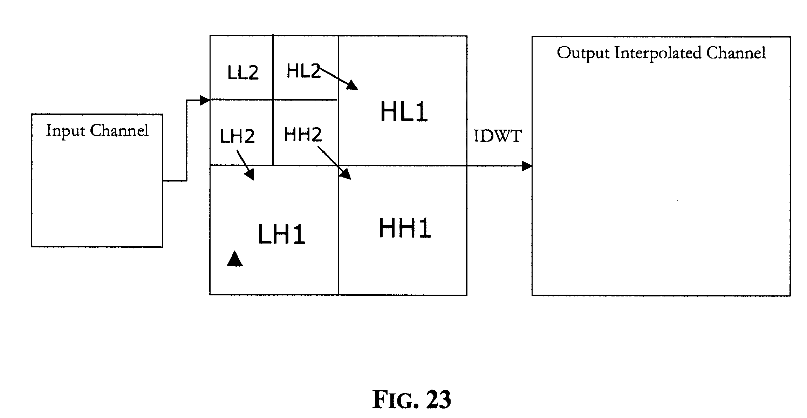

In practice, this corresponds to performing a wavelet transform on two decomposition levels, wherein the second level of decomposition contains the wavelet transform (on a single level) of the starting image (channel), while the first level contains also the coefficients of the sub-bands LH1, HL1 and HH1 that will need to be interpolated starting from those of the corresponding second level sub-bands LH2, HL2 and HH2, as schematically depicted in Figure 23.

Differently from the first embodiment, also the coefficients of the HH sub-band are considered. Introduction and use of the coefficients of the HH sub-band allows to add information relating to the details that objectively improve the quality of the final image, even if this quality increment remains undetectable to a normal observation.

The interpolation criteria for generating the missing coefficients, are different although all of them consider the correlation among the known wavelet coefficients, weighting them in an appropriate manner depending on the position of the coefficient to be estimated.

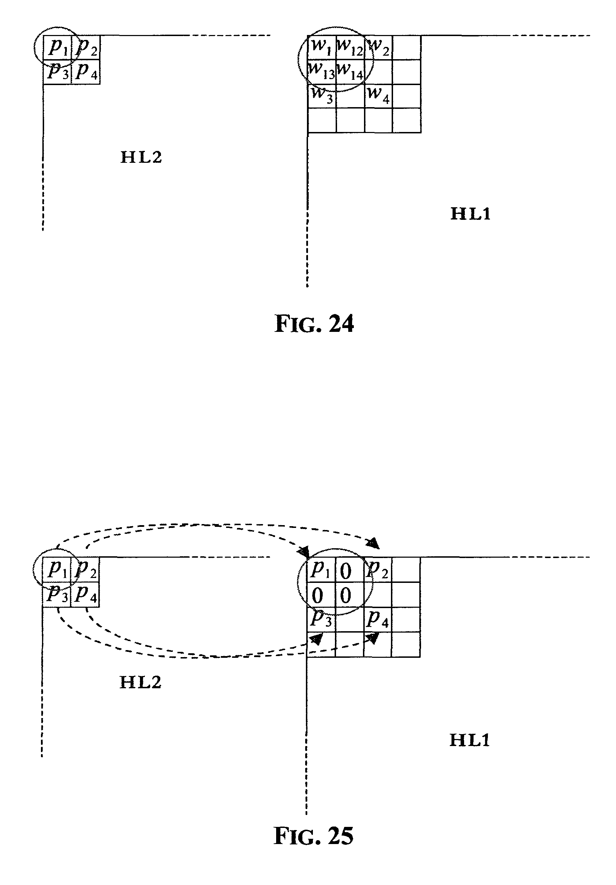

Referring to the sub-band HL (the same considerations hold also for the other sub-bands), the number of known wavelet coefficients is four times smaller than that to be determined, thus, for instance, four coefficients of the HL1 band correspond at a known coefficient of the HL2 band, as shown in Figure 24.

The fact that the number of values to be interpolated are four times the number of known values, is evident by remembering that at each successive level of wavelet decomposition, the resolution of the sub-bands is halved, as depicted in Figure 13.

In particular let us indicate with $p_1$, $p_2$, $p_3$ and $p_4$ the wavelet coefficients of the input image, with $w_1$, $w_2$, $w_3$ and $w_4$ the coefficients to be interpolated in the position corresponding to the known values, and with $w_{12}$, $w_{13}$ and $w_{14}$ the unknown values. A similar reasoning must be made also for the coefficients of the other sub-bands.

In particular three different ways of estimation for introducing missing wavelet coefficients have been devised.

*Method 1: Replicating the known coefficient, 0 for the remaining three coefficients.*

As shown in Figure 25, in this case an exact replica of the known coefficient is considered in the position that, from the spatial point of view corresponds to that of the value to be interpolated in the sub-band HL1 .

According to this method, the relation among the known coefficients and the coefficients to be interpolated is:

$$w_1 = p_1, \quad w_2 = p_2, \quad w_3 = p_3, \quad w_4 = p_4,$$

$$w_{12} = 0, \quad w_{13} = 0, \quad w_{14} = 0.$$

Obviously, these operations must be repeated on the whole sub-band HL1 and on the other sub-bands LH1 and HH1.

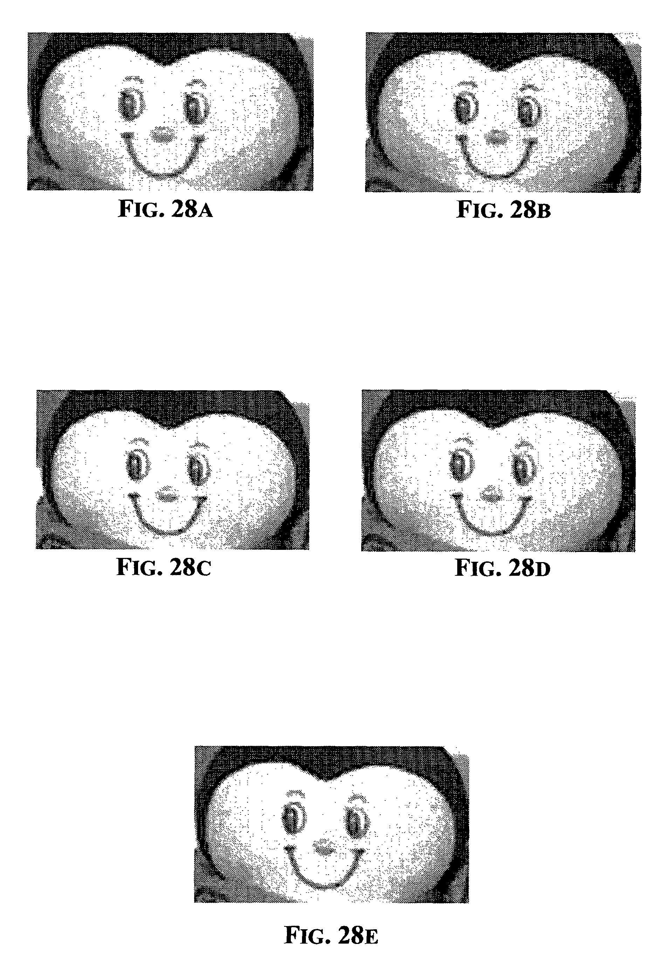

This approach does not consider the position of the coefficient to be interpolated inside the destination wavelet sub-band. Indeed, imposing a null value to three of the four values to be interpolated means that the particular zone is considered strongly self-correlated, which normally is not true. This happens because two adjacent coefficients in a wavelet sub-band are spatially separated by two or more pixels in the output image, depending on the level of the transform being considered. Visually, this type of approximation causes the presence of evident step variations of color in the output images, as shown in Figure 28c, where results obtained by applying the three different interpolation approaches are compared.

*Method 2: Distribution with constant weight of the known coefficient on the values to be interpolated.*

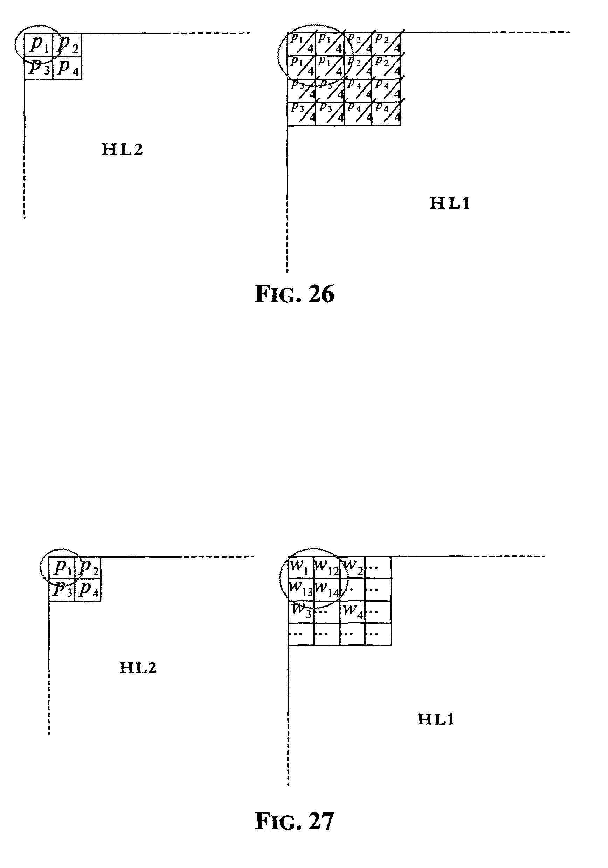

According to this alternative approach, the local trend of the values to be interpolated compared to the trend of the known values is taken into consideration, as depicted in Figure 26.

The relation defined between the coefficients may be expressed as:

$$w_1 = w_{12} = w_{13} = w_{14} = \frac{p_1}{4}$$

Obviously, also in this case, these operations must be repeated on the whole HL sub-band and on all the other sub-bands LH and HH.

Once more, even if the considered interpolation improves locally the estimation of the interpolated wavelet coefficients, there is still a tie to a single known wavelet coefficient, neglecting in part a possible correlation with other known neighboring values, as depicted in Figure 28d.

It may be noticed that even according to this alternative embodiment the zipper effect that was observable caused by considering only the null values in the sub-bands HL, LH and HH in the reconstructed image is almost completely eliminated. Moreover, no visual defects are detected by considering the replica of a single coefficient and null values for the adjacent coefficient. The resulting image is thus visually much more pleasant than that obtained according to the first approach.

From a computational point of view, besides the application of the DWT and the IDWT, in practice no further calculations are necessary.

*Method 3: Weighted distribution of the known coefficients on the values to be interpolated.*

This third and last interpolation approach is more directed to a localized analysis of the wavelet coefficients to be estimated than the two approaches discussed above, because it considers not the value of a single known coefficient but also of the other known coefficients close to it, by weighting them in an appropriate manner as shown in Figure 28e.

The values of the coefficients to be interpolated are calculated through the following relations:

$$w_1 = \frac{p_1}{4}, \quad w_2 = \frac{p_2}{4}, \quad w_3 = \frac{p_3}{4}, \quad w_4 = \frac{p_4}{4}$$

$$w_{12} = \frac{(w_1 + w_2)}{2}, \quad w_{13} = \frac{(w_1 + w_3)}{2}$$

$$w_{14} = \frac{(w_1 + w_2 + w_3 + w_4)}{4}$$

In comparing this last approach with the previous one a consideration may be done. Indeed, it is not possible in general to state that an approach is better than the other but the results vary depending on the type of examined image. In any case, both yield better results than the first method.

From a computational point of view, according to this third approach, besides the calculations needed for performing the DWT and the IDWT, further calculations are necessary for the evaluation of the coefficients to be interpolated.

Figure 28 compares the results of the three different interpolation methods.

From a first purely visual examination, it may be observed that Figure 28d and 28e are very similar to each other and visibly better than the three cases a), b) and c). Furthermore, noticeable improvements in term of contour definition and of blurring may be noticed.

The considered methods, in particular, were applied to each of the single R, G, B channels obtained from the input image in the Bayer pattern format.

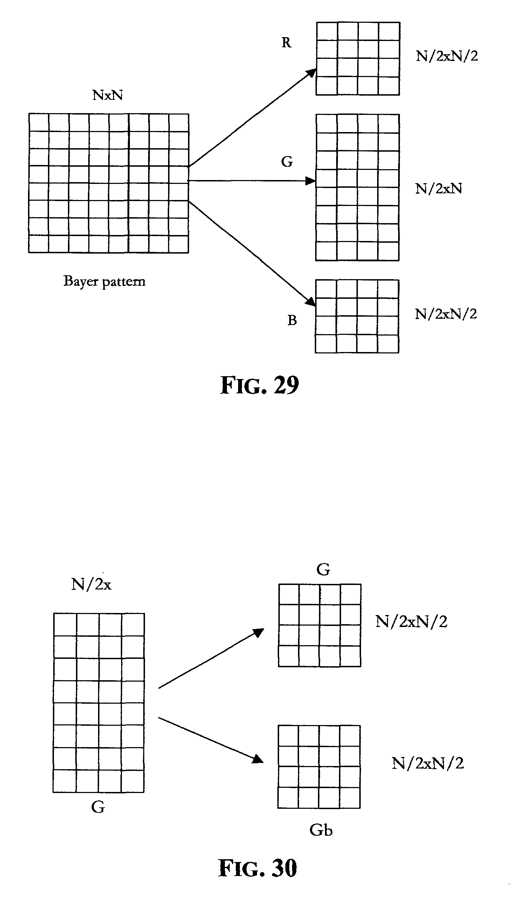

Some clarifications may be done about the channel G. In fact, according to what has been said about the Bayer pattern, after the Bayer pattern image is decomposed in the three components R, G and B, the dimensions of the three channels are not alike, because of the double number of pixels of channel G than of the other two channels: R and B, as depicted in Figure 29.

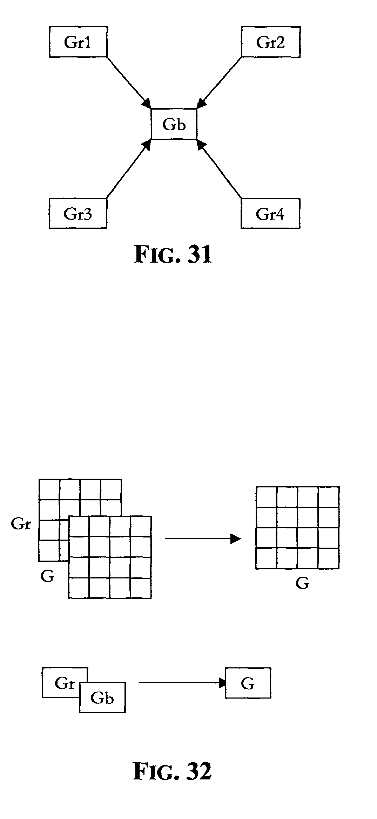

Instead of representing the channel G as a single green component image, it is possible to divide it further into two images (sub-images or sub-channels), containing respectively the green pixels that, in the Bayer pattern, are adjacent to the red pixels (channel Gr) and green pixels that are adjacent the blue pixels (channel Gb), as shown in Figure 30.

As a consequence of the zoom factor applied to the single channels, three output images will be obtained, one for each channel, that will have twice the dimensions of the input ones.

The problem, when conjugating the channels for obtaining a color image, consists in that the G channel dimensions are twice those of the other channels, considered singularly, and thus a further interpolation step applied exclusively to the channel G is necessary.

The ways of performing this additional step of interpolation are two and may be applied, depending on the needs, either to the embodiment in which the whole channel G is considered, or to the embodiment in which the Gr and Gb components are considered.

In case of a weighted interpolation of the pixels G using the pixels Gr, each pixel G is interpolated by considering the four pixels Gr adjacent to the central pixel (Gb), as shown in Figure 31.

According to this first approach, the equation that express the value of the pixel G relative to the four pixels Gr and the respective control pixel Gb is

$$G \approx \frac{(Gr1 + Gr2 + Gr3 + Gr4)}{4}$$

As may be observed in Figures 33a and 33c, this type of interpolation introduces unpleasant halos in the G channel, due probably to the fact of using the average of the four values close to the central (reference) pixel Gb that may in reality belong to different regions than that of the pixel Gb itself.

In case of using an average of the Gr and Gb pixels, the pixels Gr and Gb located in the same position in their respective channels are considered, as depicted in Figure 32.

According to this alternative approach, the equation used may be the following:

$$G = \frac{(Gr + Gb)}{2}$$

In respect to the preceding approach, an overall improvement of the interpolated G channel may be observed, thus this second approach to the interpolation of G channel values is generally preferred.

Whichever of the two above mentioned methods is used, the channel G is reshaped such that its size is equal to the other two channels: R and B, thus permitting the conjugating of all three primary colors components for outputting an image to each pixel of which is associated a triplet of interpolated values (R, G, B).

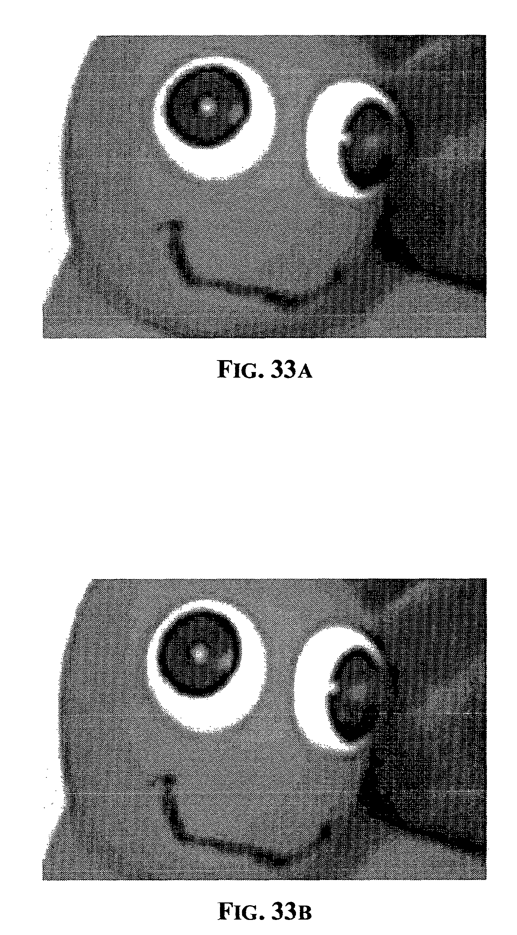

As mentioned above, Figure 33 shows an example of interpolation of the channels Gr and Gb for obtaining a correctly dimensioned channel G, by applying the above discussed two alternative methods.

In order to quantify numerically the results discussed above, it is necessary to rely on appropriate metrics.

A commonly used index for comparing the quality of images is the PSNR (Peak-Signal-to-Noise-Ratio) between the original (input) image and the interpolated (output) image:

$$PSNR = 10\log_{10}\left[\frac{255^2}{\frac{1}{XY}\sum_{l=0}^{X-1}\sum_{m=0}^{Y-1}(o(l,m) - i(l,m))^2}\right]$$

wherein X is the number of columns and Y is the number of rows of the image, 255 is the maximum value that a single pixel may assume (considering a 8-bits representation). *o(l,m)* and *i(l,m)* are the original image and the interpolated image, respectively.

The following table summarizes the PSNR values relative to the reference image used for testing the novel methods of this invention.

| Image Interp. Method | | Bi-linear | | Bi-cubic | | Method 1) | | Method 2) | | Method 3) |
|---|---|---|---|---|---|---|---|---|---|---|
| | | | | | | | | | | |
| Image 1) | | 34,291035 | | 35,607194 | | 34.286032 | | 35,121026 | | 35,049656 |

Table continued

| Image Interp. Method | | Bi-linear | | Bi-cubic | | Method 1) | | Method 2) | | Method 3) |
|---|---|---|---|---|---|---|---|---|---|---|
| Image 2) | | 25,763257 | | 26,869003 | | 25,249958 | | 26,524945 | | 26,300876 |
| Image 3) | | 32,947383 | | 34,186978 | | 32,931643 | | 33,78191 | | 33,664888 |
| Image 4) | | 26,075318 | | 26,681388 | | 25,927033 | | 25.988919 | | 26,112773 |
| Image 5) | | 23,085669 | | 23,594315 | | 22,950236 | | 22,770289 | | 22,924452 |
| Image 6) | | 34,473588 | | 35,2741 | | 34,356494 | | 34,720084 | | 34,753958 |
| Image 7) | | 28,83523 | | 29,856806 | | 28,79532 | | 29,091606 | | 29.196114 |

It must be highlighted that, although the PSNR values obtained with the methods of this invention are smaller than those obtained by applying the prior art methods, this has a limited importance in this context.

The reason of this difference is to be attributed to the PSNR contribution given by the G channel in respect to the total PSNR. Generally, such a PSNR contribution lowers the total PSNR value and this may be explained in a very simple way. In fact, while the interpolation algorithms of the prior art interpolates only on a half of the values of the G channel, because the other half remains unchanged, the according to this invention methods interpolate all the values of the G channel.

As a consequence, the fact that the PSNR values are systematically lower than the ones of the prior art methods of color interpolation the PSNR parameter is unsuitable for evaluating the quality of the results obtained with the different algorithms of this invention.

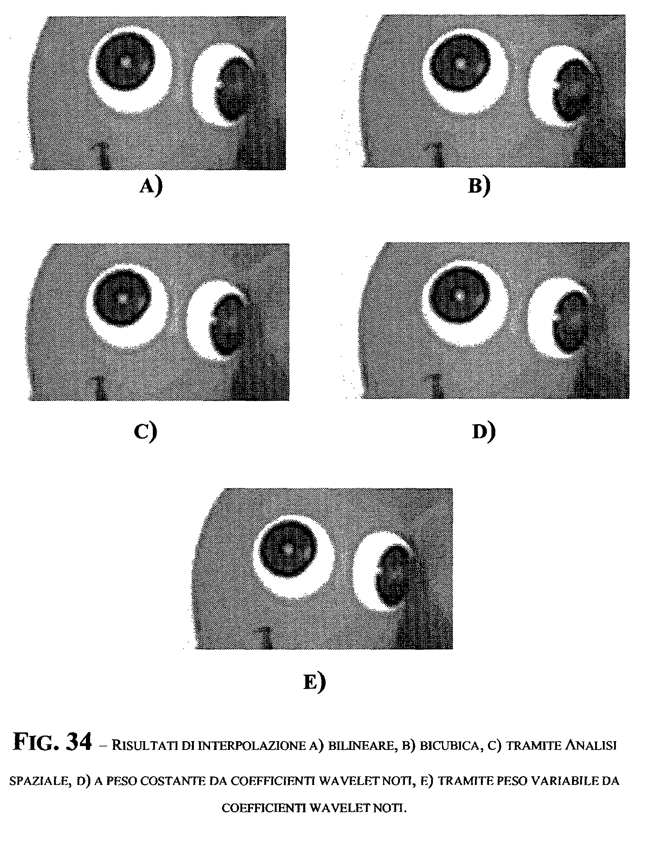

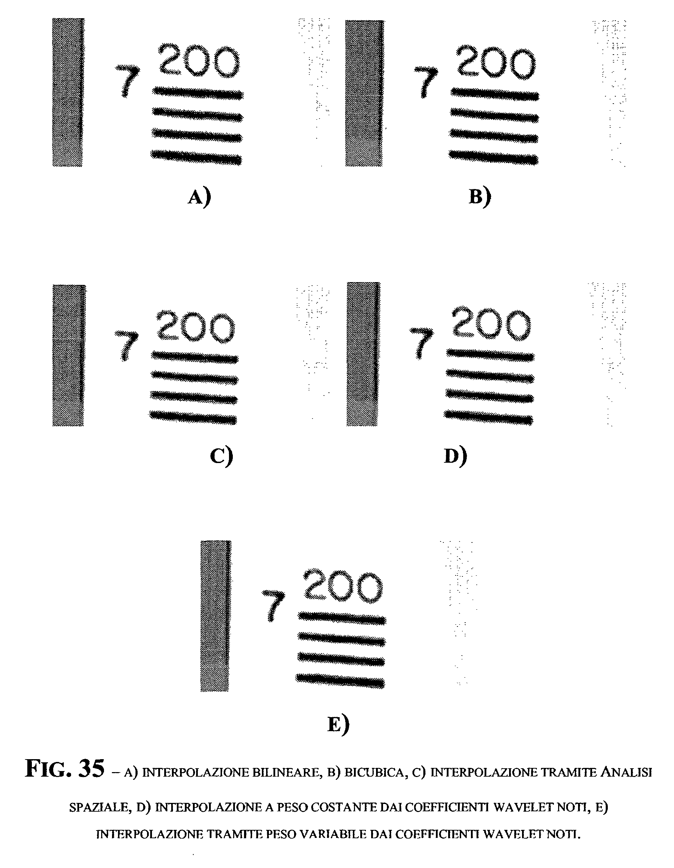

Figures 34 and 35 show particulars extracted from the considered reference images.

At each particular extracted from the interpolated images a 300% zooming factor has been applied.

From a first visual analysis of the considered image portion a relevant enhancement of the quality may be observed with the interpolations performed by using the methods of this invention, in respect to the observable quality obtained with the prior art methods.

In particular, in each image of Figures 34 and 35, relative to the methods b) and c), an annoying zipper effect may be clearly observed, that is the presence of pixels highlighted as small blocks, by contrast this effect is completely absent with the methods d) and e) and f). Moreover, with the methods e) and f) it is possible to reduce the presence of false colors compared to a) and b), and also to c), though in a less relevant manner.

From the comparative tests so far carried out, clearly emerges the utility of further investigating the spatial and frequency correlation with the low-pass component of the original signal, and with previous and successive coefficients of the levels of decomposition, aiming to obtain an even more analytically connection expressed between these components.

Although the method of this invention for performing color interpolation in the DWT domain has been described for the case of Bayer pattern input images, the digital sensor may be provided of a different filtering pattern of the focused light beam, for instance according to a different filtering scheme of the three primary colors (RGB) or of two or more base hues. In any case, the input image would be divided in as many images or channels composed of pixels of one or the other primary color or base hue on which interpolation of the missing pixel values will be performed separately according to one of the above described methods of this invention, substantially in the same way it has been described for the case of the three RGB channels of a Bayer pattern.

The method of the invention, in the various embodiments thereof as described above, may be carried out via software on images acquired by a color digital sensor, using a computer program directly loadable in the internal memory of a computer, comprising a software code for performing the method of the invention.

Alternatively and preferably, the method of this invention, in any of the various embodiments described, may be carried out via hardware, by realizing appropriate circuit structures for processing digital data according to the particular algorithm, typically in the form of an accelerator board or circuit coupled through a system bus to a microprocessor and possibly even to an external RAM.

REFERENCES

[1] B.E. Bayer, "Color imaging array", *U. S. Patent 3*, *971*, *075*, 1976.

[2] S.G. Mallat, "A theory for multiresolution signal decomposition: The wavelet representation", *IEEE Trans.on Pattern Analysis and Machine Intelligence,* Vol. 11, pp.679-693, July 1989.

[3] G. Mamola, G. Garbo, "Lezioni di Teoria dei segnali", Dario Flaccovio Editore, 1998.

[4] D.S. Taubman, M.W. Marcellin, "JPEG2000: Image compression fundamentals, standards and practice", Kluwer Academic Publisher, 2002.

[5] M. Unser, T. Blu, "Mathematical properties of the JPEG2000 wavelet filters", *IEEE Trans. Image Processing,* Vol.12, N° 09, pp.1080-1090, Sept 2003.

[6] C. Christopoulos, A. Skodras, T. Ebrahimi, "The JPEG2000 still image coding system: An overview", *IEEE Trans. Consumer Electronics,* Vol.46, N°46, pp.1103-1127, Nov. 2000.

[7] K. Revathi, G. Raju, S.R. Prabhakaran Nayar, "Image zooming by wavelets", *Fractals,* Vol.8, N° 3, pp.247-253, 2000.

[8] M. Antonini, M Barlaid, P Mathieu, I. Daubechies, "Image coding using wavelet transform", *IEEE Trans. Image Processing,* Vol.1, N° 2, pp. 205-220, Apr. 1992.

[9] M.D. Adams, R. Ward, "Wavelet transforms in the JPEG-2000 standard"

[10] R. Gonzales, R.E. Woods, "Digital image processing" 2nd Ed., Addison-Wesley.

[11] 1. Daubechies, W. Sweldens, "Factoring wavelet transforms into lifting steps", Technical Report, Bell-Laboratories, Lucent Technologies, 1996.

[12] W. Sweldens, "The lifting scheme: A construction of second generation wavelets", *SIAMJ. Math Anal.,* 1997.

[13] M. Vetterli, J. Kovacevic, "Wavelet and sub-band coding", Prentice Hall, Englewood Cliffs, NJ, 1992.

[14] W. Sweldens, "The lifting scheme: A custom-design construction of biorthogonal wavelets", *Appl. Comput. Harmon. Anal. ,* 1996.

[15] G.M. Davis, A. Nosratinia, "Wavelet-based image coding: An overview", *Applied and Computational Control, Signal and Circuits,* 1, pp. 25-48.

[16] http://www.jpeg.org/jpeg2000/index,html, *sito Web* relativo allo Standard JPEG2000.

[17] C. Ljzhi, Z. Zenghui, X. Hui, "The general construction of 9-7 wavelet filters and its application in image compression", *Int. Conf. on Signal Processing,* Vol.1, pp.652-655, Aug. 2002.

[18] M. Vetterli, D. LeGall, "Perfect reconstruction FIR filter banks: Some properties and factorizations", *IEEE Trans. Acoust. Speech and Sig. Proc.,* pp.1057-1471, July 1989.

[19] R. Ramanath, W. E. Snyder, G. L. Bilbro, W. A. Sander III, "Demosaicking methods for Bayer color arrays", *Journal of Electronic Imaging* 11 (3), pp.306-315, July 2002.

[20] R. Kimmel, "Demosaicking: image reconstruction from color CCD samples", *IEEE Trans. Image Process.* 7(3), pp.1221-1228, 1999.

[21] J. E. Adams, J. F. Hamilton, "Design of practical color filter array interpolation algorithm for digital cameras", *Proc. SPIE Real Time Imaging II*, Vol.3028, pp.117-125, Feb. 1997.

[22] E. Maeland, "On the comparison of Interpolation Methods", *IEEE Trans. On Medical Imaging,* Vol.7, N°3, Sept. 1998.

[23] R. G. Keys, "Cubic Convolution interpolation for digital image processing", *IEEE Trans. Acoust., Speech, Signal Process.,* Vol. ASSP-29, pp. 1153-1160, 1981.

[24] H. S. Hou, H. C. Andrews,"Cubic Splines for image interpolation and digital filtering", *IEEE Trans. Acoust., Speech, Signal Process.,* Vol. ASSP-26, N°6, Dec. 1978.

[25] R. L. Claypoole, R. G. Baraniuk, R. D. Nowak,"Adaptive wavelet transforms via lifting", IEEE ,1998.

[26] B. Lee, K. Sohn, C. Lee, "Performance comparison of various interpolation methods for Color Filter Arrays", IEEE, 2001.

[27] R. Ramanath, "Interpolation methods for Digital Still Cameras"....

[28] S. C. Pei, I. K. Tam, "Effective color interpolation in CCD color filter arrays using signal correlation", *IEEE Trans. On Circuits and System for Video Tecn.,* Vol.13, N°6, June 2003.

[29] W. T. Freeman, "Median filter for reconstructing color samples", *U.S. Patent 4,724,295*, Feb. 1988.

[30] M. D. Adams, "Reversible integer-to-integer wavelet transform for image coding", Thesis, *The University of British Columbia,* Sept 2002.

[31] G. Uytterhoeven, "Wavelets: Software and applications", Thesis, Katholieke Universiteit Leuven, April 1999.

## Claims

1. A method of color interpolation of pixels of an image detected by a digital color sensor by interpolating separately the pixels belonging to each of a plurality of subdivision channels of the pixels of the detected image respectively for primary red-green-blue colors (RGB) or for base hues for generating weighted values relating to either said primary colors or to said base hues for each pixel of the image to be output, **characterized in that** it comprises the steps of:

   defining wavelet coefficients of the wavelet sub-band LL depending on the values of the pixel of each channel; estimating for each channel wavelet coefficients of the other wavelet sub-bands HL, LH and HH of the image to be output in function of said wavelet coefficients of the wavelet sub-band LL of the image to be output.

2. The method of claim 1, **characterized in that** said wavelet coefficients of the wavelet sub-band LL correspond to the primary color or base hue values of the pixels belonging to the relative subdivision channel of the pixels of the input image.

3. The method of claim 2, **characterized in that** the wavelet coefficients of the sub-bands HL and LH in the missing positions are obtained by interpolation in function of the calculated threshold values, while the coefficients of the sub-band HH are set to zero.

4. The method of claim 1, **characterized in that** said wavelet coefficients of the wavelet sub-band LL are the calculated coefficients of the discrete wavelet transform of a certain level (LL2, LH2, HL2, HH2) of the primary colors or base hue values belonging to the relative channel of subdivision of pixels of the input image, in function of which wavelet coefficients of the first level wavelet sub-bands (LH1, HL1 and HH1) of the image to be output are generated by interpolation.

5. The method of claim 3, **characterized in that** the wavelet coefficients of the first level wavelet sub-bands (LH1, HL1 and HH1) of the image to be output in the missing positions are set to zero.

6. The method of claim 4, **characterized in that** the wavelet coefficients of the first level wavelet sub-bands (LH1, HL1 and HH1) of the image to be output in the missing positions are generated by using a distribution with constant weights of the known coefficient of the equivalent wavelet sub-band of the coefficients obtained by means of discrete wavelet transform of the values of primary color or base hue of the pixels belonging to the relative subdivision channel of the pixels of the input image.

7. The method of claim 4, **characterized in that** the wavelet coefficients of the first level sub-bands (LH1, HL1 and HH1) of the image to be output, in the missing positions, are generated by using a weighted distribution of the known coefficients on the values to be interpolated of the equivalent wavelet sub-band of the coefficients obtained by means of discrete wavelet transform of the values of primary color or base hue of the pixels belonging to the relative subdivision channel of the pixels of the input image.

8. The method according to any of the previous claims, **characterized in that** the input image is a Bayer image and the green channel is subdivided into two subchannels Gr and Gb, respectively, each having size equal to that of the red (R) and blue (B) channels, and **in that** the wavelet coefficients of the wavelet sub-bands, in the missing positions, are interpolated in function of the values of one or the other of said two subdivision channels.

9. The method according to any of claims from 1 to 7, **characterized in that** the input image is a Bayer image and the green channel is subdivided into two sub-channels Gr and Gb, respectively, each having size equal to that of the red (R) and blue (B) channels, and **in that** of interpolating the wavelet coefficients of the wavelet sub-bands, in the missing positions, in function of the average of the values of one and the other of said two subdivision subchannels.

10. A method according to claim 1, **characterized in that** it comprises the following operations:

optionally carrying out the discrete wavelet transform or DWT separately on the pixels belonging to each of said subdivision channels;
estimating by interpolation of the missing wavelet coefficients of each pixel of the image to be output depending on the spatial correlation around each pixel in function of calculated threshold values or using known wavelet coefficients from said optional discrete wavelet transform of the pixel of the relative subdivision channel replicated in image positions corresponding in said wavelet sub-bands HL, LH and HH of the image to be output;
carrying out the inverse discrete wavelet transform of the values of the image pixels for each channel;
generating by conjugation of the interpolated values of each channel said weighted values for each pixel of the output color image.

11. The method of claim 10, wherein the data relative to pixels of the green color of the image coming from the sensor are subdivided into two subchannels, a first one composed of green pixels adjacent to red pixels and the second of green pixels adjacent to blue pixels, by interpolating the missing wavelet coefficients of the image pixels to be output basing on the spatial correlation around each pixel itself in relation to calculated threshold values or using the known wavelet coefficients from said optional discrete wavelet transform of the pixels of the relative subdivision subchannel replicated in image positions corresponding to said wavelet sub-bands HL, LH and HH of the image to be output for said two subchannels in which the pixels belonging to the green channel are subdivided; and further comprising a pre-interpolation of the pair of values of the two green subchannels before generating by conjugation of the interpolated values of each channel said weighted values for each pixel of the output color image.

12. The method of claim 10, **characterized in that** the estimation by interpolation of the missing wavelet coefficients is performed separately on each wavelet sub-band (LH, HL, HH).

13. The method of claim 10, **characterized in that** the estimation of missing wavelet coefficients is performed by considering exclusively the spatial correlation among neighboring pixels in the input image depending on thresholds values without exploiting the eventual correlation with known wavelet coefficients of the input image.

14. The method according to claim 10, **characterized in that** the estimation by interpolation of the missing wavelet coefficients is performed considering their value as being null.

15. The method according to claim 10, **characterized in that** the estimation by interpolation of the missing wavelet coefficients is performed by a distribution with constant weights of the known wavelet coefficient of the input image.

16. The method of claim 1, **characterized in that** the interpolation of the missing wavelet coefficient is performed by weighted distribution of the known wavelet coefficients on the values of the coefficients to be estimated.

17. A computer program directly loadable in the internal memory of a computer, comprising a software code for performing the method according to any of claims from 1 to 16 when said code is executed by the computer.

a)                                    b)

**FIG. 1**

**FIG. 2**

**FIG. 3**

**FIG. 4**

**FIG. 5**

**FIG. 6**

$\Psi_{ab}(x)$

$a<1$

$a=1$

$a>1$

$b$      $b$    $x$

**FIG. 7**

**FIG. 8**

FIG. 9

FIG. 11

**FIG. 10A**

**FIG. 10B**

**FIG. 12**

$$0,0,0 \rightarrow \text{Full Res.}$$
$$+$$
$$1,1,1 \rightarrow 1/2 \text{ Res.}$$
$$+$$
$$2,2,2 \rightarrow 1/4 \text{ Res.}$$
$$+$$
$$3 \rightarrow 1/8 \text{ Res.}$$

**FIG. 13**

Bayer Pattern → Channel Splitting → [R, Gr Gb, B] → Colour Interpolation with DWT → [R, Gr Gb, B] → Channel Merging → Output

FIG. 14

| LL | | | HL | | |
|---|---|---|---|---|---|
| 87 | 85 | 88 | 4 | 0 | ... |
| 90 | 87 | 86 | 1 | -1 | ... |
| 87 | 88 | 87 | 1 | -1 | ... |

| | | | | | |
|---|---|---|---|---|---|
| 1 | 5 | -1 | -3 | 0 | ... |
| -2 | -1 | -1 | 5 | 2 | ... |
| ... | ... | ... | ... | ... | ... |

| 87 | 90 | 85 | 86 | 88 |
|---|---|---|---|---|
| 89 | 88 | 91 | 88 | 86 |
| 90 | 92 | 87 | 85 | 86 |
| 87 | 91 | 86 | 88 | 85 |
| 87 | 88 | 88 | 86 | 87 |

LL     HL     LH     HH

## FIG. 15A

| 87 | 213 | 125 | 86 | 234 |
|---|---|---|---|---|
| 253 | 224 | 175 | 88 | 198 |
| 201 | 214 | 123 | 250 | 86 |
| 14 | 91 | 22 | 176 | 110 |
| 87 | 27 | 168 | 86 | 214 |

| LL | | | HL | | |
|---|---|---|---|---|---|
| 87 | 125 | 234 | 107 | -93 | ... |
| 201 | 123 | 86 | 52 | 146 | ... |
| 87 | 168 | 214 | -100 | -105 | ... |

| | | | | | |
|---|---|---|---|---|---|
| 109 | 51 | 38 | -69 | -124 | ... |
| -130 | -123 | 40 | 97 | 90 | ... |
| ... | ... | ... | ... | ... | ... |

LH     HH

## FIG. 15B

**FIG. 16**

**FIG. 17**

FIG. 18

FIG. 19

FIG. 20

FIG. 21

**FIG. 22**

FIG. 23

EP 1 615 168 A1

EP 1 615 168 A1

FIG. 24

FIG. 25

35

EP 1 615 168 A1

HL2

HL1

**FIG. 26**

HL2

HL1

**FIG. 27**

36

**FIG. 28A**

**FIG. 28B**

**FIG. 28C**

**FIG. 28D**

**FIG. 28E**

R

N/2xN/2

NxN

G

N/2xN

Bayer pattern

B

N/2xN/2

**FIG. 29**

N/2x

G

N/2xN/2

G

N/2xN/2

Gb

**FIG. 30**

**FIG. 31**

**FIG. 32**

FIG. 33A

FIG. 33B

**FIG. 34** – RISULTATI DI INTERPOLAZIONE A) BILINEARE, B) BICUBICA, C) TRAMITE ANALISI SPAZIALE, D) A PESO COSTANTE DA COEFFICIENTI WAVELET NOTI, E) TRAMITE PESO VARIABILE DA COEFFICIENTI WAVELET NOTI.

**FIG. 35** – A) INTERPOLAZIONE BILINEARE, B) BICUBICA, C) INTERPOLAZIONE TRAMITE ANALISI SPAZIALE, D) INTERPOLAZIONE A PESO COSTANTE DAI COEFFICIENTI WAVELET NOTI, E) INTERPOLAZIONE TRAMITE PESO VARIABILE DAI COEFFICIENTI WAVELET NOTI.

**European Patent Office**

## EUROPEAN SEARCH REPORT

Application Number

EP 04 42 5503

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 164 781 A (MATSUSHITA ELECTRIC INDUSTRIAL CO., LTD) 19 December 2001 (2001-12-19) * claims 1,11,17-19,39,53 * * page 11, line 10 - line 54 * * page 21, line 55 - page 27, line 50 * | 1,2,5, 14,17 | G06T3/40 |
| A | WO 01/26359 A (SONY ELECTRONICS INC) 12 April 2001 (2001-04-12) * page 2, line 14 - line 26 * * claims 1-7 * | 1,17 | |
| A | EP 1 271 928 A (AGILENT TECHNOLOGIES, INC.) 2 January 2003 (2003-01-02) * claims 1,2,9,11,12,16,19 * | 1 | |
| D,A | RAMANATH R. ET AL.: "Demosaicking Methods for Bayer Color Arrays" JOURNAL OF ELECTRONIC IMAGING, vol. 11, no. 3, July 2002 (2002-07), pages 306-315, XP002317295 section 2 | 1-17 | |
| D,A | REVATHY K ET AL: "IMAGE ZOOMING BY WAVELETS" FRACTALS, WORLD SCIENTIFIC PUBLISHING CO., SINGAPORE, SG, vol. 8, no. 3, September 2000 (2000-09), pages 247-253, XP000986588 ISSN: 0218-348X sections 3 and 4 | 1-17 | TECHNICAL FIELDS SEARCHED (Int.Cl.7) G06T H04N |

The present search report has been drawn up for all claims

| Place of search | Date of completion of the search | Examiner |
|---|---|---|
| The Hague | 11 February 2005 | Deltorn, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 615 168 A1**

## ANNEX TO THE EUROPEAN SEARCH REPORT
## ON EUROPEAN PATENT APPLICATION NO.

EP 04 42 5503

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2005

| Patent document cited in search report | | Publication date | Patent family member(s) | | Publication date |
|---|---|---|---|---|---|
| EP 1164781 | A | 19-12-2001 | JP<br>JP<br>EP<br>WO<br>JP | 2000299781 A<br>2001008027 A<br>1164781 A1<br>0056060 A1<br>2000332999 A | 24-10-2000<br>12-01-2001<br>19-12-2001<br>21-09-2000<br>30-11-2000 |
| WO 0126359 | A | 12-04-2001 | AU<br>WO | 7860300 A<br>0126359 A1 | 10-05-2001<br>12-04-2001 |
| EP 1271928 | A | 02-01-2003 | US<br>EP<br>JP | 2002191854 A1<br>1271928 A2<br>2003046786 A | 19-12-2002<br>02-01-2003<br>14-02-2003 |

EPO FORM P0459

For more details about this annex : see Official Journal of the European Patent Office, No. 12/82